(19) Europäisches Patentamt
European Patent Office
Office européen des brevets

(11) **EP 4 604 238 A1**

(12) **EUROPEAN PATENT APPLICATION**
published in accordance with Art. 153(4) EPC

(43) Date of publication:
**20.08.2025 Bulletin 2025/34**

(21) Application number: **23885862.5**

(22) Date of filing: **02.11.2023**

(51) International Patent Classification (IPC):
*H01M 10/052* (2010.01)  *H01B 1/06* (2006.01)
*H01B 1/08* (2006.01)  *H01M 4/13* (2010.01)
*H01M 4/131* (2010.01)  *H01M 4/62* (2006.01)
*H01M 10/056* (2010.01)

(52) Cooperative Patent Classification (CPC):
**H01B 1/06; H01B 1/08; H01M 4/13; H01M 4/131;
H01M 4/62; H01M 10/052; H01M 10/056;
Y02E 60/10**

(86) International application number:
**PCT/JP2023/039680**

(87) International publication number:
**WO 2024/096108 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 JP 2022177619**

(71) Applicant: **Sumitomo Chemical Company, Limited
Tokyo 103-6020 (JP)**

(72) Inventors:
• **DOI, Atsunori
Niihama-shi, Ehime 792-8521 (JP)**
• **NAKAJIMA, Hideto
Niihama-shi, Ehime 792-8521 (JP)**

(74) Representative: **Vossius & Partner
Patentanwälte Rechtsanwälte mbB
Siebertstrasse 3
81675 München (DE)**

(54) **BATTERY MATERIAL, POSITIVE ELECTRODE, AND BATTERY**

(57) A battery material containing a solid electrolyte material and an ionic liquid, in which the solid electrolyte material contains an alkali metal element, a metal element or metalloid element except the alkali metal element, and a halogen element, and the ionic liquid contains an alkali metal ion as a cation.

*Fig.1*

## Description

### Technical Field

The present disclosure relates to a battery material, a positive electrode, and a battery.

### Background Art

Batteries such as lithium ion batteries that perform charge and discharge in accordance with movement of metal ions between a positive electrode and a negative electrode are actively studied because of their high capacity. As an electrolyte for a lithium ion battery or the like, a solution of a lithium salt containing an organic solvent or an ionic liquid is known, and as a solid electrolyte in which studies on the solid electrolyte are being conducted from the viewpoint of safety and processability, various kinds of compounds such as an oxide-based solid electrolyte and a sulfide-based solid electrolyte are known.

### Citation List

### Patent Literature

Patent Literature 1: WO 2019/135346 A

### Summary of Invention

### Technical Problem

The solid electrolyte material may be used for securing ion conductivity not only in the electrolyte of the battery but also in the positive electrode and the negative electrode (Patent Literature 1 or the like). However, the solid electrolyte material cannot often form a sufficient interface from the viewpoint of flexibility. Therefore, in order to enhance the flexibility, it has been proposed to enhance the flexibility by mixing with an additive such as a polymer, an organic solvent, or an ionic liquid. However, as a result of intensive studies by the present inventors, when a material for forming each member of a battery (battery material) contains such an additive, a chemical reaction may occur between a conventional additive and a solid electrolyte, and there is a problem in stability. In particular, this tendency is remarkable in a halide solid electrolyte.

The present disclosure has been made in view of the above circumstances, and an object thereof is to provide a battery material, a positive electrode, and a battery which have high stability.

### Solution to Problem

The present disclosure includes the following embodiments [1] to [9].

[1] A battery material containing

a solid electrolyte material and an ionic liquid, in which
the solid electrolyte material contains an alkali metal element, a metal element or metalloid element except the alkali metal element, and a halogen element, and
the ionic liquid contains an alkali metal ion as a cation.

[2] The battery material of [1], further containing a positive electrode active material.

[3] The battery material of [2], in which a volume ratio of the positive electrode active material with respect to a total amount of volumes of the positive electrode active material and the solid electrolyte material is 0.50 to 0.99.

[4] The battery material of [2] or [3], in which the positive electrode active material is a lithium-containing composite oxide containing nickel.

[5] The battery material of any one of [1] to [4], in which

the solid electrolyte material contains a compound represented by $A_\alpha M_\beta Z_\gamma D_\zeta O_\eta$,
where A is an alkali metal, M is a metal element or metalloid element except alkali metal elements, Z is a halogen element, D is at least one of P and S, $1.6 \leq \alpha \leq 3.5$, $0 < \beta \leq 1.2$, $3 \leq \gamma \leq 6.5$, $0 \leq \zeta \leq 0.5$, and $0 \leq \eta \leq 2$.

[6] The battery material of any one of [1] to [5], in which a volume ratio of the solid electrolyte material with respect to a total amount of volumes of the solid electrolyte material and the ionic liquid is 0.30 to 0.90.

[7] The battery material of any one of [1] to [6], further containing a binder resin.

[8] A positive electrode containing the battery material of any one of [1] to [7].

[9] A battery including the positive electrode described in [8].

[10] A battery member being a laminate having a first layer and a second layer laminated on the first layer, in which the first layer contains a solid electrolyte material, and the second layer contains an ionic liquid containing an alkali metal ion as a cation.

[11] The battery member of [10], in which the first layer contains a polymer.

[12] A battery material containing

a solid electrolyte material, an alkali metal salt, and an ether compound, in which
the solid electrolyte material contains an alkali metal element, a metal element or metalloid element except the alkali metal element, and a halogen element, and
at least a part of the ether compound is coordinate-bonded to an alkali metal ion.

**Advantageous Effects of Invention**

According to the present disclosure, it is possible to provide a battery material, a positive electrode, and a battery which have high stability.

**Brief Description of Drawings**

FIG. 1 is a view showing an X-ray diffraction chart obtained for battery materials of Examples 1 and 2 and Comparative Example 1.

FIG. 2 is a graph of ionic conductivity ($\sigma$) versus 1000/T (T is an absolute temperature) for the battery material of Example 1.

FIG. 3 is a view showing an X-ray diffraction chart of the battery material of Comparative Example 1.

FIG. 4 is a view showing a result of impedance measurement of a symmetric cell.

**Description of Embodiments**

A battery material of the present embodiment contains a solid electrolyte material and an ionic liquid, in which the solid electrolyte material contains an alkali metal element, a metal element or metalloid element except the alkali metal element, and a halogen element, and the ionic liquid contains an alkali metal ion as a cation. Note that, in the battery material of the present embodiment, the solid electrolyte and the ionic liquid may be mixed, but the surface of a composition containing the solid electrolyte may be coated with the ionic liquid (that is, at least a part of the ionic liquid is included as a coating layer). In this case, a part of the ionic liquid may be impregnated into the composition. The shape of the composition containing the solid electrolyte is not particularly limited, and may be a sheet shape, a pellet shape, or the like. The solid electrolyte material may satisfy at least one of the following (A) to (C): (A) the solid electrolyte material contains In as the metal element except the alkali metal element; (B) the solid electrolyte material contains Zr as the metal element except the alkali metal element and two or more halogen elements; and (C) the solid electrolyte material further contains an oxygen element.

The battery material of the present embodiment is a composition for forming a positive electrode, a negative electrode, or an electrolyte (solid electrolyte) of a battery. When the battery material is a material for forming a positive electrode (positive electrode material), the battery material may contain a positive electrode active material. Furthermore, when the battery material is a material for forming a negative electrode (negative electrode material), the battery material may contain a negative electrode active material.

The alkali metal element contained in the solid electrolyte material may be any of Li, Na, K, Rb, or Cs, and the ion conductive substance may contain at least one of Li, Na, or K, may contain at least one of Li or Na, or may contain Li.

Among the alkali metal elements contained in the solid electrolyte material, the proportion of one alkali metal element may be 80% by mol or more, 90% by mol or more, or 95% by mol or more. The one alkali metal element may be at least one of Li, Na, or K, may be at least one of Li or Na, or may be Li.

A content of the alkali metal element in the solid electrolyte material may be 15 to 30 mol%, 18 to 28 mol%, or 20 to 27 mol% with respect to the total amount of atoms contained in the solid electrolyte material.

Examples of the metal element or metalloid element except the alkali metal element include divalent to pentavalent elements, and may include one or more selected from the group consisting of a trivalent element and a tetravalent element. The solid electrolyte material may contain one or two or more metal elements or metalloid elements except the alkali metal element.

Examples of the divalent element include an alkaline earth metal and Zn. The alkaline earth metal may be at least one of Mg, Ca, Sr, or Ba, may be at least one of Mg or Ca, or may be Mg. Examples of the trivalent metal element include Sc, La, Ce, Pr, Nd, Pm, Sm, Eu, Gd, Tb, Dy, Ho, Er, Yb, Lu, Y, Al, Ga, In, Bi, and Sb. Examples of the tetravalent element include Zr, Ti, Hf, and Sn, and may be Zr. Examples of the pentavalent element include Nb and Ta. Examples of the pentavalent or higher element include W.

The metal element or metalloid element except the alkali metal element may include at least one of In and Zr. A content of the metal element or metalloid element except the alkali metal element in the solid electrolyte material is preferably 8 to 15 mol%, more preferably 8 to 13 mol%, and further preferably 9 to 12 mol% based on the all elements contained in the solid electrolyte material.

The solid electrolyte material may contain 70% by mol or more, 75% by mol or more, or 80% by mol or more of one element of the metal elements or metalloid elements except the alkali metal element with respect to the total amount of the metal elements or metalloid elements except the alkali metal element. In this case, the one element may be a trivalent or tetravalent element, and may be In or Zr. In this case, the solid electrolyte material contains a metal element or metalloid element (also referred to as a dopant element X1) other than the one element except the alkali metal element. The dopant element X1 is an element different from the one element. When the one element is a trivalent element, the dopant element X1 may be at least one element selected from the group consisting of Zr, Sn, Ti, Nb, Ta, Bi, and Y, and may be at least one element selected from the group consisting of Zr, Sn, Nb, and Ta. When the one element is a tetravalent element, the dopant element X1 may be at least one element selected from the group consisting of Bi, Al, Ga, In, Sc, Sm, Sb, La, Zn, Sn, and an alkaline earth metal, and may be at least one element selected from the group consisting of Bi, La, Zn, and Sn.

The halogen element contained in the solid electrolyte material of the present embodiment may be any of F, Cl, Br, or I, and may include at least one of Cl, Br, or I, may include at least one of Cl or Br, or may include Cl. The ion conductive substance may contain only one halogen element, or may contain two or more halogen elements.

A content of the halogen element in the solid electrolyte material is preferably 40 to 70 mol% and more preferably 45 to 68 mol% based on all elements contained in the halogen element.

The solid electrolyte material may contain 80% by mol or more, 85% by mol or more, or 90% by mol or more of one element of the halogen elements with respect to the total amount of the halogen elements. The one halogen element may be Cl or Br, and may be Cl. In this case, the solid electrolyte material contains a halogen element (also referred to as a dopant element X2) except the one halogen element. When the one halogen element is Cl, the dopant element X2 may be at least one of Br and I, and may be Br. When the solid electrolyte material contains Zr as the metal element except the alkali metal element, the solid electrolyte material may contain two or more halogen elements, may contain Cl and a halogen element except Cl, and may contain Cl and Br. A content of the halogen element except Cl or a content of Br may be 10 mol% or less, 0.1 to 10 mol%, or 1 to 8 mol% with respect to the total amount of the halogen elements contained in the solid electrolyte material.

The solid electrolyte material may contain at least one of P and S (also referred to as a dopant element X3). A content of the dopant element X3 in the solid electrolyte material may be 0.05 to 5 mol%, 0.1 to 3 mol%, 0.2 to 2 mol%, or 0.3 to 1 mol% with respect to the total amount of atoms contained in the solid electrolyte material.

When the solid electrolyte material contains at least one of P and S, the solid electrolyte material may contain a tetravalent metal element or metalloid element. Examples of the tetravalent metal element or metalloid element include Zr, Ti, and Hf, and may be Zr. Furthermore, at least one of Hf and Mg may be contained as the dopant element X2.

The content of the dopant element X3 in the solid electrolyte material may be 50 mol% or less, 1 to 30 mol%, 1 to 20 mol%, or 2 to 10 mol% of the content of the tetravalent metal element or metalloid element. The content of the dopant element X in the solid electrolyte material may be 20% by mol or less, 15% by mol or less, 10% by mol or less, or 8% by mol or less of the content of the tetravalent metal element or metalloid element.

The solid electrolyte material may have a hexagonal crystal structure, and may have a crystal structure belonging to the space group $P6_3mc$. The solid electrolyte material having a hexagonal crystal structure may contain at least one element selected from the group consisting of Sc, La, Y, Ga, In, Bi, Sb, Ge, Zr, Sn, Nb, and Ta, and may contain Sc.

The solid electrolyte material may contain a compound represented by the following formula (A):

$$A_\alpha M_\beta Z_\gamma D_\zeta O_\eta \cdots \qquad (A)$$

where A is an alkali metal, M is a metal element or metalloid element except alkali metal elements, Z is a halogen element, D is at least one of P and S, $1.6 \leq \alpha \leq 3.5$, $0 < \beta \leq 1.2$, $3 \leq \gamma \leq 6.5$, $0 \leq \zeta \leq 0.5$, and $0 \leq \eta \leq 2$.

Examples of the compound represented by formula (A) include compounds represented by the following formulae (1) to (3):

$$A_{\alpha1} M_{\beta1} Z_{6-\delta1} X1_{\varepsilon11} X2_{\varepsilon12} \cdots \qquad (1)$$

$$A_{\alpha2}M_{\beta2}X2_{\varepsilon21}Z_{6-\gamma2}X1_{\varepsilon22} \cdots \qquad (2)$$

$$A_{\alpha3}M_{\beta3}X1_{\varepsilon31}Z_{\delta3}D_{\zeta}O_{\eta} \cdots \qquad (3)$$

In formula (1), A, M, and Z are each an alkali metal element, a trivalent metal element or metalloid element, or a halogen element, and specific examples thereof include those described above. M preferably includes In. X1 and X2 are the dopant element X1 and the dopant element X2, respectively, and specific examples thereof include those described above. $\alpha1$ may be $2 \le \alpha1 \le 3.5$ or $2.5 \le \alpha1 \le 3$. $\beta1$ may be $0.5 \le \beta1 \le 1.1$ or $0.5 \le \beta1 \le 1$. $\delta1$ may be $0 \delta1 \le 1$ or $0 \le \delta1 \le 0.5$. $\varepsilon11$ may be $0 \le \varepsilon11 \le 0.7$, $0 < \varepsilon11 \le 0.5$, or $0.01 \le \varepsilon11 \le 0.3$. $\varepsilon12$ may be $0 \le \varepsilon12 \le 0.7$, $0 < \varepsilon11 \le 0.5$, or $0.01 \le \varepsilon11 \le 0.3$.

In formula (2), A, M, and Z are each an alkali metal element, a tetravalent metal element or metalloid element, or a halogen element, and specific examples thereof include those described above. M preferably includes Zr. X1 and X2 are the dopant element X1 and the dopant element X2, respectively, and specific examples thereof include those described above. $\alpha2$ may be $1.6 \le \alpha2 \le 2.5$, $1.8 \le \alpha2 \le 2.4$, or $2 \le \alpha2 \le 2.3$. $\beta2$ may be $0 < \beta2 \le 1.1$, $0.5 \le \beta2 \le 1$, or $0.8 \le \beta2 \le 1$. $\gamma2$ may be $0 \le \gamma2 < 1$, $0.01 \le \gamma2 \le 0.8$, $0.02 \le \gamma2 \le 0.7$, $0.1 \le \gamma2 \le 0.6$, or $0.2 \le \gamma2 \le 0.6$. $\varepsilon21$ may be $0 \le \varepsilon21 \le 0.7$, $0 < \varepsilon21 \le 0.5$, or $0.01 \le \varepsilon21 \le 0.3$. $\varepsilon22$ may be $0 \le \varepsilon22 \le 0.8$ or $0 < \varepsilon21 \le 0.6$. When X2 is iodine, $\varepsilon21$ may be $0.01 \le \varepsilon21 \le 0.3$ or $0.015 \le \varepsilon21 \le 0.1$.

In formula (3), A, M, and Z are each an alkali metal element, a tetravalent metal element or metalloid element, or a halogen element, and specific examples thereof include those described above. M preferably includes Zr. X1 and D are the dopant element X1 and the dopant element X3, respectively, and specific examples thereof include those described above. $\alpha$ may be $1.5 \le \alpha \le 3$, $1.8 \le \alpha3 \le 2.5$, $1.9 \le \alpha3 \le 2.3$, or $1.95 \le \alpha3 \le 2.2$. $\beta$ may be $0.5 \le \beta \le 2$, $0.7 \le \beta3 \le 1.4$, $0.8 \le \beta3 \le 1.2$, or $0.9 \le \beta3 \le 1.1$. $\zeta$ may be $0.005 \le \zeta \le 0.5$, $0.01 \le \zeta \le 0.2$, $0.02 \le \zeta \le 0.15$, or $0.025 \le \zeta \le 0.10$. $\delta3$ may be $3.5 \le \delta3 \le 5$, $3.7 \le \delta3 \le 4.3$, or $3.8 \le \delta3 \le 4.1$. $\eta$ may be $0.1 \le \eta \le 1.5$, $0.7 \le \eta \le 1.5$, $0.8 \le \eta \le 1.3$, or $0.9 \le \eta \le 1.1$.

A method for producing the solid electrolyte material is not particularly limited, and examples thereof include a method including a step of performing ball milling on a raw material. A product after ball milling may be subjected to annealing. Furthermore, when a hexagonal solid electrolyte material is obtained, the method may include a step of heating a raw material under a pressure of 1 GPa or more.

The raw material is not particularly limited, and may be, for example, an alkali metal halide, a chloride of a metal element or metalloid element except alkali metals, or a compound containing the dopant element X1 or X2. When the dopant element is X1, a compound containing the dopant element may be a halide of X1. When the dopant element is X2, a compound containing the dopant element may be an alkali metal bromide or an alkali metal iodide. It is preferable to mix the raw materials before performing the ball milling, and it is more preferable to mix the raw materials under an inert atmosphere (for example, Ar atmosphere).

The conditions of the ball milling are not particularly limited, and can be set to 10 to 100 hours at a rotation speed of 200 to 700 rpm. The grinding time is preferably 24 hours to 72 hours and more preferably 36 to 60 hours.

The balls used to perform the ball milling are not particularly limited, and zirconia balls can be used. The size of the balls used is not particularly limited, and balls of 2 mm to 10 mm can be used.

The raw materials are sufficiently mixed by performing the ball milling for the above-described time, and the mechanochemical reaction is promoted, so that the ionic conductivity of the obtained compound can be improved.

The annealing is preferably performed under an inert atmosphere or under vacuum. The annealing temperature is, for example, preferably 150 to 300°C and more preferably 200 to 250°C. The annealing time may be, for example, 1 to 10 hours, and is preferably 3 to 6 hours.

A volume ratio of the solid electrolyte material with respect to a total amount of volumes of the solid electrolyte material and the ionic liquid in the electrode material may be 0.30 to 0.99, 0.50 to 0.99, 0.70 to 0.99, or 0.80 to 0.99. The volume ratio of the solid electrolyte material with respect to the total amount of volumes of the solid electrolyte material and the ionic liquid in the electrode material may be 0.30 to 0.90.

The ionic liquid contained in the electrode material is not particularly limited as long as it contains an alkali metal ion as a cation. Such an ionic liquid may be a solvated ionic liquid. The ionic liquid may contain an alkali metal salt and an ether compound. The ether compound may be at least one of an acyclic ether compound and a cyclic ether compound. Note that the cyclic ether compound is a compound including a ring structure having at least one ether bond in the ring, and examples thereof include crown ether. In the crown ether, at least one or more hydrogen atoms bonded to a carbon atom which is a ring member may be substituted. The substituent may be a monovalent substituent such as a halogen atom.

The ether compound may be coordinate-bonded to an alkali metal ion. That is, the battery material of the present embodiment may contain a solid electrolyte, an alkali metal salt, and an ether compound, in which the solid electrolyte contains an alkali metal element, a metal element or metalloid element except the alkali metal element, and a halogen element, and at least a part of the ether compound is coordinate-bonded to an alkali metal ion.

The acyclic ether compound is a compound having no cyclic ether moiety, and may have a ring structure except the cyclic ether moiety. Examples of the acyclic ether compound include glyme. The glyme may be represented by the following chemical formula (B).

$$R^1\text{-}(OCH_2CH_2)_n\text{-}OR^2 \cdots \qquad (B)$$

Here, $R^1$ and $R^2$ are each independently an alkyl group having 1 to 3 carbon atoms, and may be a methyl group. n may be 1 to 8, 2 to 6, or 3 or 4. The ionic liquid may contain one or two or more ether compounds. Note that at least one hydrogen atom of the ethylene glycol unit ($OCH_2CH_2$) in chemical formula (B) may be substituted with a substituent. Examples of the substituent include monovalent substituents such as a halogen atom and an alkyl group having 1 to 3 carbon atoms.

The alkali metal salt is not particularly limited, and examples thereof include $MF$, $MCl$, $MBr$, $MI$, $MClO_4$, $MPF_6$, $MBF_4$, $M_2SO_4$, $M[(C_hF_{2h+1})SO_3]$ (h is 0 to 3), and $M[(C_hF_{2h+1})SO_2]_2N$ (h is 0 to 3) where M is the alkali metal, and the alkali metal salt may be at least one of $M[FSO_2]_2N$ and $[(CF_3)SO_2]_2N$. The ionic liquid may contain one or two or more alkali metal salts.

A molar ratio of the ether compound and the alkali metal ion ((ether compound) : (alkali metal ion)) in the ionic liquid may be 1 : 0.8 to 1 : 1.2, 1 : 0.9 to 1 : 1.1, or 1 : 0.95 to 1 : 1.05.

The positive electrode active material is not particularly limited, and examples thereof include an alkali metal composite oxide containing an alkali metal element and at least one metal element selected from the group consisting of a transition metal element and Al. The transition metal element may be at least one selected from the group consisting of V, Cr, Mn, Fe, Co, Ni, and Cu, and may include Ni. For example, when the alkali metal element is lithium (that is, a lithium composite oxide), examples of the lithium composite oxide include $LiCoO_2$, $LiNiO_2$, $LiMn_2O_4$, $LiNi_{0.5}Mn_{1.5}O_4$, $Li_2MnO_3$, $LiNi_xMn_yCo_{1-x-y}O_2$ [$0 < x+y < 1$]), $LiNi_xCo_yAl_{1-x-y}O_2$ [$0 < x+y < 1$]), $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, and $Li_2MnSiO_4$. When the positive electrode active material contains an alkali metal element except Li, specific examples thereof include those in which Li in the above specific examples is replaced with another alkali metal. Examples of the alkali metal except Li include Na and K.

A volume ratio of the positive electrode active material with respect to a total amount of volumes of the positive electrode active material and the solid electrolyte material in the solid electrolyte material may be 0.50 to 0.99, 0.60 to 0.99, or 0.80 to 0.99.

The positive electrode material may contain a positive electrode active material, and as necessary, a polymer electrolyte, a binder resin, a conductive auxiliary agent, an organic solvent, an ionic liquid, and the like.

A content of the positive electrode active material in the positive electrode material may be 50 mass% or more, 60 mass% or more, or 70 mass% or more with respect to the total amount of the positive electrode material. The content of the positive electrode active material in the positive electrode material may be 99 mass% or less, 95 mass% or less, or 90 mass% or less with respect to the total amount of the positive electrode material. Furthermore, the content of the positive electrode active material in the positive electrode material may be 50 to 99 mass%, 60 to 95 mass%, or 70 to 90 mass% with respect to the total amount of the positive electrode material.

The negative electrode material may contain a negative electrode active material, and as necessary, a polymer electrolyte, a binder resin, a conductive auxiliary agent, an organic solvent, an ionic liquid, and the like.

Examples of the negative electrode active material include an alkali metal element, a simple substance of an element such as Si, P, Sn, Si-Mn, Si-Co, Si-Ni, In, or Au, an alloy or a composite containing these elements, a carbon material such as graphite, a substance in which alkali metal ions are inserted between layers of the carbon material, and a titanium-containing oxide. The alkali metal element may be Li, Na, or K, may be Li or Na, and may be Li.

The titanium-containing oxide may be a compound represented by the composition formula: $A_sTiO_t$ (A is an alkali metal element, and $s \geq 0$). Here, the alkali metal element A may be Li, Na, or K, may be Li or Na, and may be Li.

A battery of the present embodiment includes a positive electrode, a negative electrode, and an electrolyte disposed between the positive electrode and the negative electrode, and at least one of the positive electrode, the negative electrode, and the electrolyte contains the battery material of the present embodiment. The positive electrode may be formed by forming a layer containing a positive electrode material on a current collector. Furthermore, the negative electrode may be formed by forming a layer containing a negative electrode material on a current collector. Examples of the battery include batteries that perform charge and discharge by movement of alkali metal ions, such as a lithium ion battery and a sodium ion battery. The battery may be a primary battery, a secondary battery, or an all-solid-state battery.

The battery material of the present embodiment may further contain a binder resin (binder or binder polymer), a conductive auxiliary agent, or the like. The binder resin is not particularly limited, and examples thereof include a fluorine-based resin and an acrylic resin. The fluorine-based resin is preferably a resin having a carbon chain as a main chain. The carbon chain may be formed by radical polymerization of an ethylenically unsaturated group. Examples of the fluororesin include poly(vinylidene fluoride-co-hexafluoropropylene) (PVDF-HFP) and polyvinylidene fluoride (PVDF). A content of the binder resin in the electrode material may be 0.5 to 10 mass% or 1 to 7 mass%. The fluorine-based resin and the acrylic resin may be resins having a property of being fibrillated.

Examples of the conductive auxiliary agent include carbon materials such as graphites such as natural graphite (scale-like graphite or the like) and artificial graphite; carbon blacks such as acetylene black, Ketjen black, channel black, furnace black, lamp black, and thermal black; and carbon fibers. A content of the conductive auxiliary agent in the electrode material may be 0.5 to 10 mass% or 1 to 7 mass%.

The battery material (battery member) of the present embodiment may be obtained by forming a composition containing the above-described solid electrolyte material and then coating the surface of the composition with an ionic liquid (this coating is also referred to as a second layer). The composition may be a molded body or a layer (first layer). When the composition is a composition containing a material except the ionic liquid, the effect of the present disclosure can be further exhibited. The ionic liquid may be applied, for example, as a mixture with other components such as a binder resin (a composition containing an ionic liquid). Furthermore, the ionic liquid may be further applied to the surface of the battery material. The composition may further contain a polymer such as the binder polymer. The battery member may be a laminate. Furthermore, the battery material may contain an ionic liquid (other ionic liquid) except the above-described ionic liquid (the ionic liquid containing an alkali metal ion as a cation) as long as the effect of the present embodiment is not impaired. Examples of the other ionic liquid include an ionic liquid having an organic cation as a cation. A content of the other ionic liquid can be 5 mass%, 1 mass% or less, or 0.1 mass% or less with respect to the total amount of the battery material. The first layer may be any of a positive electrode layer, a negative electrode layer, and a solid electrolyte layer, and may be a solid electrolyte layer. The positive electrode layer may contain a positive electrode active material, a solid electrolyte material, and optionally a binder resin, a conductive auxiliary agent, and the like. The negative electrode layer may contain a negative electrode active material, a solid electrolyte material, and optionally a binder resin, a conductive auxiliary agent, and the like. The solid electrolyte layer may contain a solid electrolyte material and optionally a binder resin, a conductive auxiliary agent, and the like.

The battery may include a separator. The separator may be a porous material or a resin porous material. Specific examples thereof include a porous polyolefin membrane and a porous ceramic membrane. Examples

(Production Example 1 of Ionic Liquid)

Tetraethylene glycol dimethyl ether (hereinafter, also referred to as G4) and lithium bis(trifluoromethanesulfonyl) imide (LiTFSI) were mixed at a ratio of 50 : 50 to produce an ionic liquid (G4 + LiTFSI).

(Production Example 2 of Ionic Liquid)

Tetraethylene glycol dimethyl ether (hereinafter, also referred to as G4) and lithium bis(fluorosulfonyl)imide (LiFSI) were mixed at a ratio of 50 : 50 to produce an ionic liquid (G4 + LiFSI).

(Production Example 1 of Solid Electrolyte Material)

· Ball milling

In an argon atmosphere having a dew point of -70°C or lower (hereinafter, referred to as a dry argon atmosphere), LiCl and $InCl_3$ were mixed at a molar ratio of 3 : 1 to prepare a raw material.

In a zirconia pot having a volume of 50 ml, 1.2 g of the raw material was put, and 65 g of zirconia balls having a diameter of 4 mm were put therein. A treatment was performed by a planetary ball milling apparatus (manufactured by Verder Scientific GmbH & Co. KG, PM 400) under conditions of 380 rpm for 48 hours so that the mixture was mechanochemically reacted to obtain a crude composition of Production Example 1.

· Annealing

The crude composition of Example 1 obtained above was heated at 230°C for 5 hours in a dry argon atmosphere to obtain a solid electrolyte material of Production Example 1 with a starting composition of $Li_3InCl_6$.

(Production Example 2 of Solid Electrolyte Material)

In a dry argon atmosphere having a dew point of -70°C or lower, $Li_2O$, $ZrCl_4$, and $Li_3PO_4$ were mixed at a molar ratio of 1 : 1 : 0.033 to prepare a raw material.

In a zirconia pot having a volume of 50 ml, 1.2 g of the raw material was put, and 65 g of zirconia balls having a diameter of 4 mm were put therein. A treatment was performed by the planetary ball milling apparatus under conditions of 300 rpm for 24 hours so that the mixture was mechanochemically reacted to obtain a solid electrolyte material having a starting composition of $Li_{2.1}ZrCl_4O(PO_4)_{0.033}$.

The ball milling was operated in a mode in which the ball mill rotates for 10 minutes, followed by a 1-minute stop as an interval, and the rotation direction is alternately switched between clockwise and counterclockwise.

(Production Example 3 of Solid Electrolyte Material)

A solid electrolyte material of Production Example 3 was obtained by the same method as in the solid electrolyte material of Production Example 1, except that LiCl, InCl$_3$, and ZrCl$_4$ were used to have a starting composition of Li$_{2.89}$In$_{0.91}$Zr$_{0.096}$Cl$_6$.

<Production of Battery Material>

(Examples 1 to 4 and Comparative Examples 1 to 3)

As shown in Table 1, a solid electrolyte material and a flexible component (ionic liquid or organic solvent) were mixed to obtain a battery material. A content of the solid electrolyte material is a content of the solid electrolyte material with respect to the total amount (total mass or total volume) of the solid electrolyte material and the flexible component.
Note that the meanings of the abbreviations in Table 1 are as follows.

· Pyrr14FSI: 1-Butyl-1-methylpyrrolidinium bis(fluorosulfonyl)imide
· EC/PC: Mixed solvent of ethylene carbonate and propylene carbonate in a volume ratio of 1 : 1
· DMF: Dimethylformamide

<Powder X-Ray Diffraction>

The obtained battery material was subjected to powder X-ray diffraction measurement at 25°C. The powder X-ray diffraction measurement was performed under the following measurement conditions.

Measuring apparatus: Ultima IV (manufactured by Rigaku Holdings Corporation)

X-ray generator: CuK$\alpha$ radiation source, voltage 40 kV, current 40 mA
X-ray detector: Scintillation counter or semiconductor detector
Measurement range: Diffraction angle 2$\theta$ = 5° to 80°
Scan speed: 4°/min

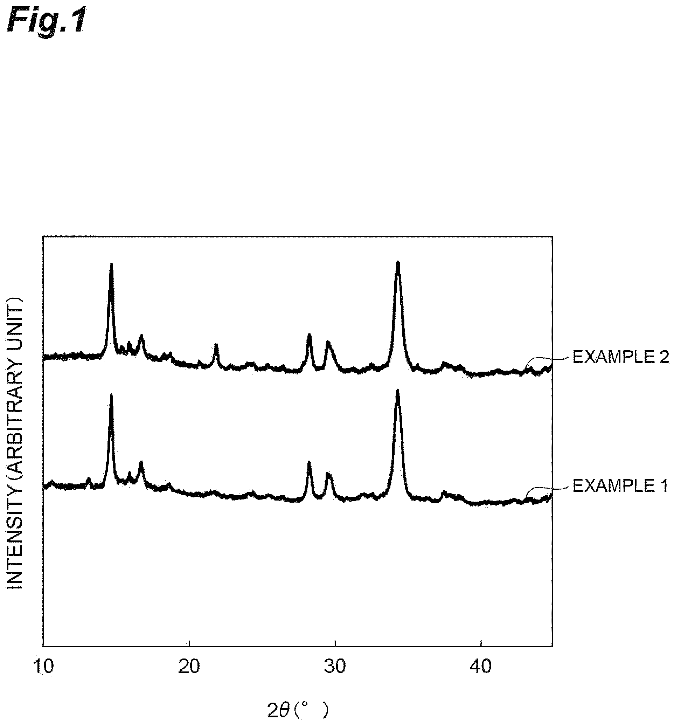

FIG. 1 is a view showing an X-ray diffraction chart obtained for battery materials of Examples 1 and 2 and Comparative Example 1.
A half-value width of a peak was determined by removing the background signal and performing fitting.

<Measurement of Ionic Conductivity>

A press molding die including a frame, a punch lower part, and a punch upper part were prepared. Note that the frame was formed of insulating polycarbonate. In addition, both the punch upper part and the punch lower part were formed of electron-conductive stainless steel, and were electrically connected to terminals of an impedance analyzer (SI 1260 manufactured by Solatron Analytical).
The ionic conductivity of the battery material was measured by the following method using the press molding die. First, filling of the battery material onto the punch lower part inserted vertically downward into a hollow section of the frame was carried out in a dry argon atmosphere. Then, the punch upper part was pressed toward the hollow section of the frame from above to apply a pressure of 370 MPa to the battery material inside the press molding die. After the pressure was applied, a punch was fastened and fixed vertically with a jig, and the impedance of the battery material was measured by an electrochemical impedance measurement method using the impedance analyzer with a constant pressure maintained.
From the impedance measurement results, a graph of a Cole-Cole plot was created. In the Cole-Cole plot, the real part of the impedance at the measurement point where the absolute value of the phase of the complex impedance is the smallest was regarded as a resistance value to ion conduction of the ion conductive substance. The resistance value was used to calculate the ionic conductivity based on the following Formula (III). The results are shown in Table 1.

$$\sigma = (RSE \times S/t)^{-1} \cdots (III)$$

In the formula,

σ is an ionic conductivity,

S is a contact area of the ion conductive substance with the punch upper part (equal to the cross-sectional area of the hollow section of the frame),

RSE is a resistance value of the battery material in impedance measurement, and

t is a thickness of the battery material when pressure is applied.

The ionic conductivity of each battery material of Examples and Comparative Examples at 25°C was measured. The results are shown in Table 1.

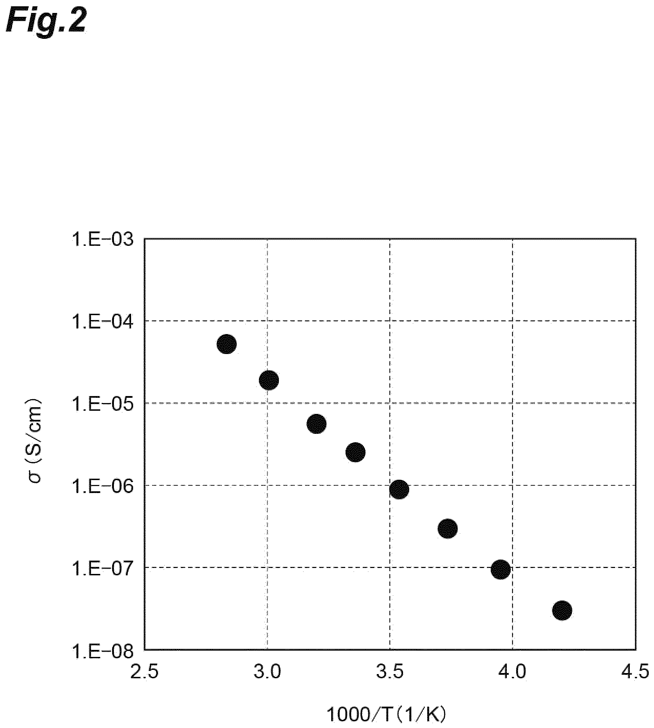

Furthermore, as shown in FIG. 2, the ionic conductivity of the battery material of Example 1 was measured at each temperature of 80°C, 60°C, 40°C, 25°C, 10°C, -5°C, -20°C, and -35°C in the same manner, a graph of ionic conductivity ($\sigma$) versus 1000/T (T is an absolute temperature) was created, and the activation energy was determined.

[Table 1]

| | Solid electrolyte material | | Flexible component | Decomposi tion behavior | Ionic conducti vity (S/cm) | Ea (eV) |
|---|---|---|---|---|---|---|
| | Composition | Content | | | | |
| Example 1 | $Li_3InCl_6$ | 76vol% | G4+ LiTFSI | None | $2.88\times10^{-6}$ | 0.50 |
| Example 2 | $Li_3InCl_6$ | 76vol% | G4+LiFSI | None | $1.31\times10^{-6}$ | |
| Example 3 | $Li_{2.1}ZrCl_4O(PO_4)_{0.033}$ | 85wt% | G4+ LiTFSI | None | $1.77\times10^{-6}$ | |
| Example 4 | $Li_{2.1}ZrCl_4O(PO_4)_{0.033}$ | 85w% | G4+ LiTFSI | None | $1.46\times10^{-6}$ | |
| Comparative Ex- ample 1 | $Li_3InCl_6$ | 50vol% | Pyrr14FSI | Decompos ed (LiCl) | | |
| Comparative Ex- ample 2 | $Li_3InCl_6$ | | EC/PC | Decompos ed (LiCl) | | |
| Comparative Ex- ample 3 | $Li_3InCl_6$ | | DMF | Decompos ed (LiCl) | | |

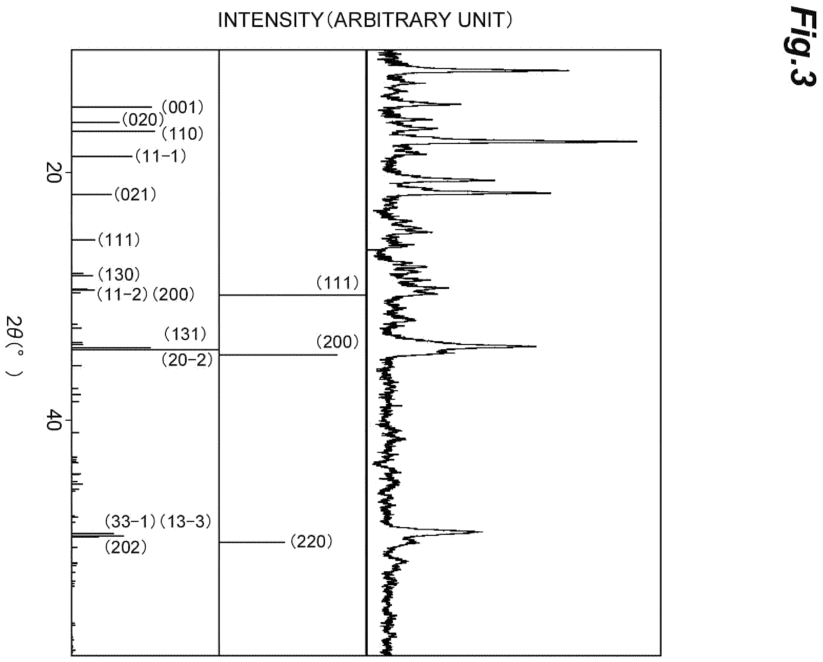

FIG. 3 shows an X-ray diffraction chart of Comparative Example 1. The upper chart is an actually measured X-ray diffraction chart. The center chart is an X-ray diffraction chart of LiCl based on theoretical calculation. The lower chart is an X-ray diffraction chart of $Li_3InCl_6$ based on theoretical calculation. As can be seen from FIG. 3, it is found that the solid electrolyte material is decomposed to generate LiCl. Note that decomposition (LiCl) in Table 1 indicates that a diffraction peak of LiCl was observed and the decomposition was confirmed. In Examples 1 to 4, a diffraction peak derived from LiCl was not confirmed.

(Measurement of Impedance)

0.27 g of solid electrolyte material $Li_{2.89}In_{0.91}Zr_{0.096}Cl_6$ obtained in "Production Example 3 of Solid Electrolyte Material" and 0.03 g of polytetrafluoroethylene (PTFE, Fine Powder 6-J manufactured by Chemours-Mitsui Fluoroproducts Co., Ltd.) were weighed, and mixed with a hand mill in an agate mortar to obtain a pellet-shaped electrolyte composition.

0.10 g of the obtained pellet-shaped electrolyte composition was collected and stretched so as to be uniform in a circle having a diameter of 17.5 mm to obtain a sheet-shaped electrolyte composition.

10 $\mu$l of the ionic liquid obtained in "Production Example 2 of Ionic Liquid" was collected with a dropper and added dropwise to each of the upper and lower surfaces of the obtained sheet-shaped electrolyte composition to form a coating layer on the upper and lower surfaces of the sheet-shaped electrolyte composition, thereby obtaining a laminate.

2 mg of Li foil thinly stretched on the upper and lower surfaces of the coating layer of the obtained laminate was bonded to each of the upper and lower surfaces to prepare a symmetric cell (the layer configuration is represented as Li/IL/SE/IL/Li, IL: ionic liquid, SE: solid electrolyte (electrolyte composition)).

No decomposition behavior was found for the solid electrolyte layer in the symmetric cell.

Furthermore, for comparison, a symmetric cell (the layer configuration is represented as Li/SE/Li) was prepared without forming a coating layer of the ionic liquid.

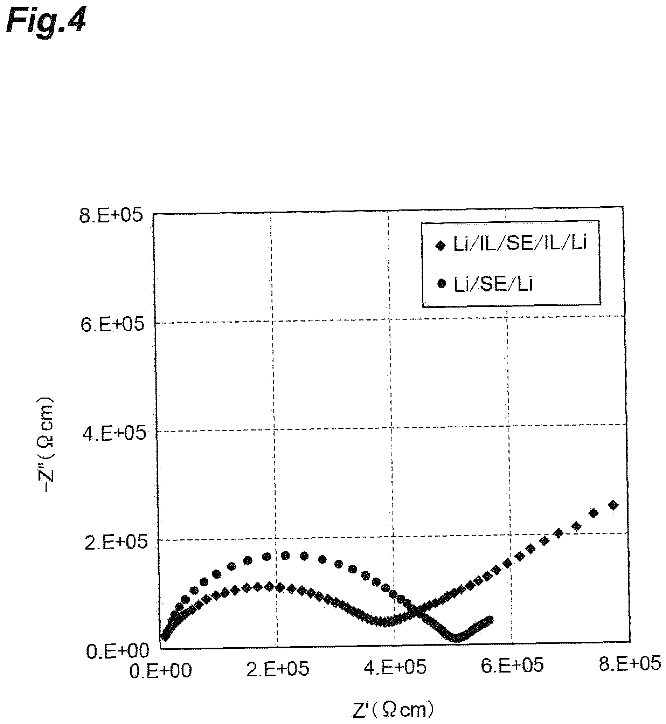

The impedance measurement of these symmetric cells were performed using an impedance analyzer (SI 1260 manufactured by Solatron Analytical). The results are shown in FIG. 4. As shown in FIG. 4, it was confirmed that the resistivity was reduced as compared with a case where there was no coating layer of the ionic liquid (G4 + LiFSI).

From this, it can be seen that the interface resistance can be reduced by preparing the laminate structure.

The resistivity of each symmetric cell is as follows.

Resistivity of Li/IL/SE/IL/Li: $3.8 \times 10^5$ Ωcm
Resistivity of Li/SEALi: $5.0 \times 10^5$ Ωcm

**Claims**

1. A battery material comprising

   a solid electrolyte material and an ionic liquid, wherein
   the solid electrolyte material contains an alkali metal element, a metal element or metalloid element except the alkali metal element, and a halogen element, and
   the ionic liquid contains an alkali metal ion as a cation.

2. The battery material according to claim 1, further comprising a positive electrode active material.

3. The battery material according to claim 1 or 2, wherein

   the solid electrolyte material contains a compound represented by $A_\alpha M_\beta Z_\gamma D_\zeta O_\eta$,
   where A is an alkali metal element, M is a metal element or metalloid element except alkali metal elements, Z is a halogen element, D is at least one of P and S, $1.6 \leq \alpha \leq 3.5$, $0 < \beta \leq 1.2$, $3 \leq \gamma \leq 6.5$, $0 \leq \zeta \leq 0.5$, and $0 \leq \eta \leq 2$.

4. The battery material according to claim 1 or 2, wherein a volume ratio of the solid electrolyte material with respect to a total amount of volumes of the solid electrolyte material and the ionic liquid is 0.30 to 0.90.

5. The battery material according to claim 2, wherein a volume ratio of the positive electrode active material with respect to a total amount of volumes of the positive electrode active material and the solid electrolyte material is 0.50 to 0.99.

6. The battery material according to claim 1 or 2, further comprising a binder polymer.

7. The battery material according to claim 2, wherein the positive electrode active material is a lithium-containing composite oxide containing nickel.

8. A battery member being a laminate having a first layer and a second layer laminated on the first layer, wherein the first layer contains a solid electrolyte material, and the second layer contains an ionic liquid containing an alkali metal ion as a cation.

9. The battery member according to claim 8, wherein the first layer contains a polymer.

10. A positive electrode comprising the battery material according to claim 2.

11. A battery comprising the positive electrode according to claim 10.

12. A battery material comprising

   a solid electrolyte material, an alkali metal salt, and an ether compound, wherein
   the solid electrolyte material contains an alkali metal element, a metal element or metalloid element except the alkali metal element, and a halogen element, and
   at least a part of the ether compound is coordinate-bonded to an alkali metal ion.

**Fig.1**

Fig.2

## Fig.3

# Fig.4

## INTERNATIONAL SEARCH REPORT

| International application No. |
|---|
| **PCT/JP2023/039680** |

**A. CLASSIFICATION OF SUBJECT MATTER**

***H01M 10/052***(2010.01)i; ***H01B 1/06***(2006.01)i; ***H01B 1/08***(2006.01)i; ***H01M 4/13***(2010.01)i; ***H01M 4/131***(2010.01)i; ***H01M 4/62***(2006.01)i; ***H01M 10/056***(2010.01)i

FI: H01M10/052; H01B1/06 A; H01B1/08; H01M4/13; H01M4/131; H01M4/62 Z; H01M10/056

According to International Patent Classification (IPC) or to both national classification and IPC

**B. FIELDS SEARCHED**

Minimum documentation searched (classification system followed by classification symbols)

H01M10/052; H01B1/06; H01B1/08; H01M4/13; H01M4/131; H01M4/62; H01M10/056

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2022/0166031 A1 (GM GLOBAL TECHNOLOGY OPERATIONS LLC) 26 May 2022 (2022-05-26) <br> paragraphs [0059]-[0063], [0073], [0075], [0091]-[0094], [0097], fig. 5 | 1-5, 7-12 |
| Y | | 6 |
| Y | JP 2019-50182 A (PANASONIC INTELLECTUAL PROPERTY MANAGEMENT CO., LTD.) 28 March 2019 (2019-03-28) <br> paragraph [0078] | 6 |
| A | US 2022/0158225 A1 (SAMSUNG ELECTRONICS CO., LTD.) 19 May 2022 (2022-05-19) | 1-12 |
| A | CN 114927753 A (INSTITUTE OF PROCESS ENGINEERING, CHINESE ACADEMY OF SCIENCES) 19 August 2022 (2022-08-19) | 1-12 |
| A | CN 114455633 A (GUANGZHOU QINGPENG AUTOMOBILE SCIENCE AND TECHNOLOGY LIMITED COMPANY) 10 May 2022 (2022-05-10) | 1-12 |

☐ Further documents are listed in the continuation of Box C.　　☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **10 January 2024** | **23 January 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2023/039680**

| Patent document cited in search report | | | Publication date (day/month/year) | Patent family member(s) | | | Publication date (day/month/year) |
|---|---|---|---|---|---|---|---|
| US | 2022/0166031 | A1 | 26 May 2022 | DE | 102021114083 | A1 | |
| | | | | CN | 114551984 | A | |
| JP | 2019-50182 | A | 28 March 2019 | (Family: none) | | | |
| US | 2022/0158225 | A1 | 19 May 2022 | KR 10-2022-0066728 | A | | |
| CN | 114927753 | A | 19 August 2022 | (Family: none) | | | |
| CN | 114455633 | A | 10 May 2022 | (Family: none) | | | |

Form PCT/ISA/210 (patent family annex) (July 2022)

**REFERENCES CITED IN THE DESCRIPTION**

**Patent documents cited in the description**

- WO 2019135346 A